Europäisches Patentamt

European Patent Office

Office européen des brevets

(11) Veröffentlichungsnummer: **0 014 730**
**B1**

(12) **EUROPÄISCHE PATENTSCHRIFT**

(45) Veröffentlichungstag der Patentschrift: **20.04.83**

(21) Anmeldenummer: **79101899.7**

(22) Anmeldetag: **12.06.79**

(51) Int. Cl.³: **B 66 F 7/14,** B 66 F 7/28, F 16 B 1/04

(54) **Sicherheitseinrichtung für eine spindelbetriebene Hebeeinrichtung, insbesondere Zwei-Säulen-Kraftfahrzeug-Hebebühne.**

(30) Priorität: **17.02.79 DE 2906172**

(43) Veröffentlichungstag der Anmeldung:
**03.09.80 Patentblatt 80/18**

(45) Bekanntmachung des Hinweises auf die Patenterteilung:
**20.04.83 Patentblatt 83/16**

(84) Benannte Vertragsstaaten:
**FR GB IT NL SE**

(56) Entgegenhaltungen:
**CH - A - 327 431
CH - A - 526 463
DE - A - 2 203 264
DE - A - 2 347 130
DE - A - 2 520 398
DE - A - 2 547 122
FR - A - 1 446 077
FR - A - 1 576 457
FR - A - 2 335 446
US - A - 4 015 824**

(73) Patentinhaber: **Gebrüder Hofmann GmbH & Co. KG
Maschinenfabrik
Pallaswiesenstrasse 72
D-6100 Darmstadt (DE)**

(72) Erfinder: **Gehron, Peter
Auf der Mauer 4
D-6140 Bensheim 6 (DE)**

(74) Vertreter: **Nöth, Heinz et al,
Steinsdorfstrasse 21 - 22
D-8000 München 22 (DE)**

Courier Press, Leamington Spa, England.

### Sicherheitseinrichtung für eine spindelbetriebene Hebeeinrichtung, insbesondere Zwei-Säulen-Kraftfahrzeug-Hebebühne

Die Erfindung betrifft eine Sicherheitseinrichtung für spindelbetriebene Hebeeinrichtungen, insbesondere Zwei-Säulen-Kraftfahrzeug-Hebebühnen, mit einer auf einer Hubspindel geführten Hubmutter, auf der ein Hubwagen aufliegt und mit einer in geringem Abstand unter der Hubmutter angeordneten Fangmutter, die auf der Hubspindel zwangsläufig mitgeführt ist und die bei Versagen der Hubmutter sich gegenüber dieser verdreht und an dieser anliegt.

Bei spindelbetriebenen Hebeeinrichtungen ist die Hubmutter ein Verschleißteil, so daß man damit rechnen muß, daß nach einer bestimmten Betriebszeit Gewindegänge abgenützt sind und kein Kraftschluß mehr zwischen Spindel- und Hubmutter besteht und dadurch die Last abstürzen kann. Es ist deshalb üblich, zusätzlich zu der Hubmutter noch eine Fangmutter einzubauen, die in normalen Betriebszustand ohne Belastung mitläuft und somit keinem Verschleiß unterliegt. Diese Fangmutter hat die Aufgabe, nach Verschleiß oder Bruch der Hubmutter die Last weiter zu tragen. Sie ist aber nicht dafür gedacht, den Betrieb der Hebeeinrichtung weiter zu gewährleisten. Aus Sicherheitsgründen muß deshalb dafür gesorgt werden, daß mit Hilfe der Fangmutter die Last zwar noch abgesenkt werden kann, ein weiterer Betrieb aber verhindert wird.

Sicherheitseinrichtungen an Hebeeinrichtungen sind in großer Anzahl bekannt. Insbesondere sind für Zwei-Säulen-Kraftfahrzeug-Hebebühnen Sicherheitseinrichtungen bekannt geworden, die elektrisch oder mechanisch arbeiten.

Bei elektrisch arbeitenden Sicherheitseinrichtungen wird beim Abfall der Hubmutter auf die Fangmutter ein Endschalter betätigt, der den Steuerstrom für die Antriebsmotore unterbricht. Ein wesentlicher Nachteil dieser elektrischen Sicherheitseinrichtung ist der, daß die elektrische Verriegelung mit einfachen Mitteln überbrückbar ist, so daß die Hebeeinrichtung entgegen den Bestimmungen weiter betrieben werden kann.

Bei mechanischen Sperrvorrichtungen sind in der Regel Sperrklinken vorgesehen, die z.B. gemäß den DE—U—73 34 515 oder 74 12 064 bei einem Hubmutterbruch eine mechanische Blockierung der Hebeeinrichtung bewirken.

Diese Einrichtungen sind relativ aufwendig und daher auch teuer, da die einzelnen Teile der Hubsäulen entsprechend der enormen Hubkraft der Antriebe konstruktiv dafür ausgelegt sein müssen.

Aus dem DE—U—76 21 309 ist eine andere mechanische Sicherheitseinrichtung bekannt geworden, bei der die Spindel Nuten aufweist, in die bei einem Verschleiß oder Bruch der Hubmutter entsprechende Sperrklinken einrasten.

Dabei wird in Kauf genommen, daß die Spindel durch die Ausbrüche geschwächt wird und beim Einrasten der Sperrklinken in die Nuten relativ große Stöße auftreten können.

Durch die DE—A—22 03 264 ist weiterhin eine Sicherung für Hebezeuge mit Spindelantrieb bekannt geworden, bei der unter dem Stellelement eine zweite Mutter vorgesehen ist. Bei Erreichen des zulässigen Verschleißes wird ein elektrisches Schaltelement betätigt, das dann den Hubantrieb unterbricht. Auch bei dieser Einrichtung besteht die Möglichkeit, durch eine einfache Maßnahme, die Sicherheitseinrichtung zu überbrücken und damit das Hebezeug weiter zu verwenden. Bei einer anderen Ausführung dieser bekannten Sicherung soll die zweite Mutter mit zahlreichen Gewindegängen versehen werden, damit diese dann bei Versagen der tragenden Spindelmutter selbst zur tragenden Mutter wird. Eine sichere Blockierung des Hebezeugs ist aber auch aufgrund der zuvor genannten Möglichkeiten nicht gewährleistet. Des weiteren muß ein Schleppkabel verwendet werden, was ebenfalls umständlich und störanfällig sein kann.

Aus der DE—A—25 47 122 ist eine Verdrehsicherung insbesondere für die Tragarme einer Hebebühne bekannt geworden, bei der eine Kontermutter mit Selbsthemmung über und/oder unter der eigentlichen Tragmutter angeordnet ist und die durch ein nachgiebiges Mitnehmerelement miteinander verbunden sind.

Bei dieser Verdrehsicherung liegt die Kontermutter durch das nachgiebige Mitnehmerelement immer direkt an der Tragmutter an, so daß eine oder beide Drehrichtungen blockiert sind, was für eine Hebeeinrichtung aber nicht geeignet ist.

Ferner ist aus der CH—A—327 431 eine spindelbetriebene Hubeinrichtung für Hebebühnen bekannt, bei der in geringem Abstand unter der Hubmutter eine Sicherheitsmutter angeordnet ist.

Aufgabe der Erfindung ist es daher, eine weitergehende Sicherheitseinrichtung für spindelbetriebene Hebeeinrichtungen zu schaffen, die einfach aufgebaut und in jeder Stellung wirksam ist und die ein Absenken der Hebeeinrichtung zwar ermöglicht, aber mit Sicherheit ein Wiederanheben verhindert.

Diese Aufgabe wird bei der eingangs genannten Sicherheitseinrichtung durch die im kennzeichnenden Teil des Anspruches 1 angegebenen Merkmale gelöst. In den Unteransprüchen sind vorteilhafte Weiterbildungen der Erfindung angegeben.

Durch die Sicherheitseinrichtung ist es möglich, auch außer bei einem Hubmutterbruch bei einem maximal zulässigen Verschleiß des Gewindes der Hubmutter, der gezielt einstellbar ist, eine weitere Nutzung der Hebeeinrichtung zu vermeiden. Des weiteren wirkt diese Sicherheitseinrichtung auch bei einer Beschädigung der Spindel, z.B. bei zu großen Rauhigkeiten oder einer ungenügenden Schmierung. Durch die gezielte Einstellbarkeit des Gewindeverschleißes entsteht beim Abfall der Hubmutter auf die Fangmutter nur ein sehr geringer oder kein Fallstoß, so daß die dynamischen Belastungen ebenfalls relativ gering sind.

Durch die ergindungsgemäße Sicherheitseinrichtung ist es weiterhin gewährleistet, daß auch bei einem Hindernis unterhalb der Trageinrichtung beim Abwärtsfahren der Hebeeinrichtung eine Blockierung eintritt, so daß kein weiterer Schaden entstehen kann.

Die Zusatzeinrichtung ist auch als sogenannte Fußschutzeinrichtung einsetzbar, da durch eine Entlastungseinrichtung zwischen Hubmutter und Hubwagen das Eigengewicht des Hubwagens und der Aufnahmeeinrichtung fast aufgehoben wird und eine zulässige, nach oben wirkende Kraft von geringer Größe die Sicherheitseinrichtung zur Wirkung kommen läßt.

Die Erfindung wird nun anhand von zwei Ausführungsbeispielen näher erläutert:

Fig. 1 zeigt schematisch die Ansicht einer Sicherheitseinrichtung, wobei die eigentliche Hebeeinrichtung nicht vollständig dargestellt ist;

Fig. 2 zeigt schematisch eine Draufsicht gemäß der Ansicht "X" in Fig. 1;

Fig. 3 zeigt schematisch eine Ansicht eines zweiten Ausführungsbeispiels.

Eine nicht näher dargestellte Hebeeinrichtung weist eine oder mehrere Hubsäulen auf, in denen Spindeln 1 gelagert sein können. Der Antrieb der Spindeln 1 kann durch entsprechende Antriebsmotore erfolgen. Auf den Spindeln 1 werden je eine Hubmutter 2 geführt. Auf der Hubmutter 2 liegt über ein Ausgleichsstück 3 der Hubwagen 4 auf, an dem die einzelnen Tragelemente mit den Aufnahmeeinrichtungen angelenkt sein können. An der Hubmutter 2 kann weiterhin ein Drehmomentabstützblech 5 vorgesehen sein, das einen Ausbruch aufweisen kann, in den ein Steg 6, der am Hubwagen 4 angeschweißt sein kann, eingreift.

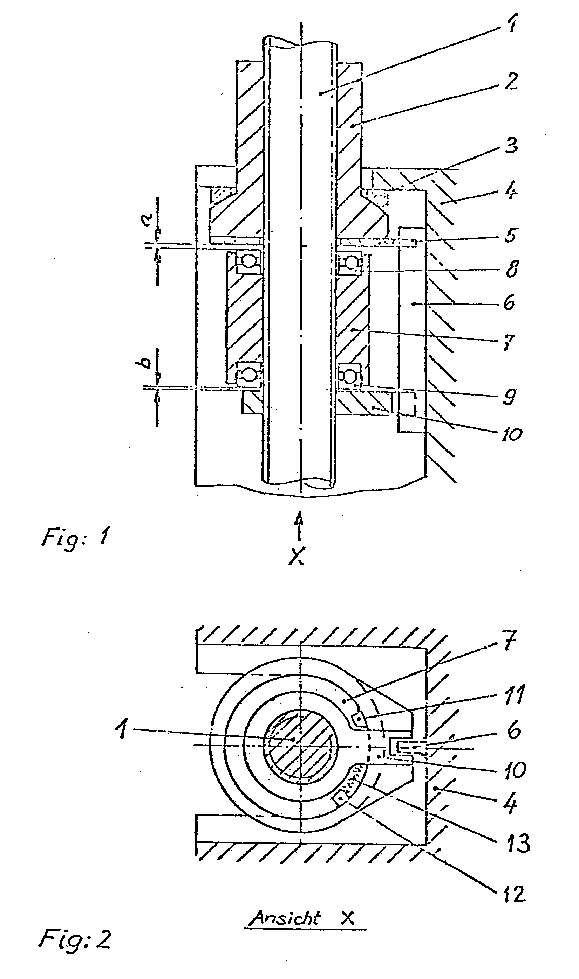

Unterhalb der Hubmutter ist in einem Abstand "a" die Fangmutter 7 angeordnet. An beiden Seiten der Fangmutter 7 können Rollenlager 8 und 9 oder entsprechende Gleitlager vorgesehen sein. Unterhalb der Fangmutter 7 ist im Abstand "b" eine Kontermutter 10 angeordnet, die sich ebenfalls am Steg 6 abstützen kann. Die Fangmutter 7 kann gemäß Fig. 2 auf der unteren Seite zwei Anschläge 11 und 12 aufweisen, gegen die sich die Kontermutter 10 abstützt, wobei zwischen dem einen Anschlag 12 und der Kontermutter 10 eine Federeinrichtung 13 vorgesehen sein kann.

Die Wirkungsweise der in den Fig. 1 und 2 dargestellten Sicherheitseinrichtungen ist die folgende:

Der zwischen der Hubmutter 2 und der Fangmutter 7 vorhandene Abstand "a" kann so gewählt werden, daß bei einem zulässigen maximalen Verschleiß des Gewindes der Hubmutter 1 diese auf der Fangmutter 7 aufliegt. Durch die entstehende Belastung der Fangmutter 7 wird sich diese zunächst gegenüber der Hubmutter 1 verdrehen wollen, was durch das obere Rollenlager 8 der Fangmutter 7 noch unterstützt wird.

Durch die geringe Reibung zwischen Hubmutter 2 und Fangmutter 7 wird die Axiallast voll auf die Fangmutter 7 übertragen. Die Gleitreibung zwischen Fangmutter 7 und Spindel 1 wird hierdurch größer als die Reibung zwischen Rollenlager 8 und Hubmutter 2, so daß sich die Kontermutter 10 beim Anheben der Hebeeinrichtung entgegen der Federwirkung der Federeinrichtung 13 von unten an die Fangmutter 7 anlegt und beim weiteren Antrieb nach oben die Fangmutter 7 kontert.

Da die Reibung zwischen der Fangmutter 7 und der Kontermutter 10 durch das untere Rollen- oder Gleitlager 9 gering gehalten wird, wird die Drehung zwischen beiden Muttern 7 und 10 kaum behindert. Die Konterwirkung wird durch die Selbsthemmung zwischen Spindel 1 und den Muttern 7 und 10 noch verstärkt.

Beim Abwärtsfahren der Hebeeinrichtung werden die Fangmutter 7 und die Kontermutter 10 wieder entkontert, so daß die angehobenen Gegenstände zunächst sicher nach unten gebracht werden können, aber ein Wiederanheben mit Sicherheit unterbunden wird.

Der Abstand "b" entspricht dem Federweg der Federeinrichtung 13. Die Kraft der Federeinrichtung 13 kann einstellbar sein und so gewählt werden, daß bei einem zu großen Gleitwiderstand der Fangmutter 7 auf der Spindel 1, der durch Beschädigungen oder durch ungenügende Schmierung der Spindel 1 hervorgerufen werden kann, die Sicherheitseinrichtung ebenfalls einsetzt. Hierbei läuft die Kontermutter 10 ebenfalls von unten an die Fangmutter 7 an und verhindert ein weiteres Anheben der Hebeeinrichtung.

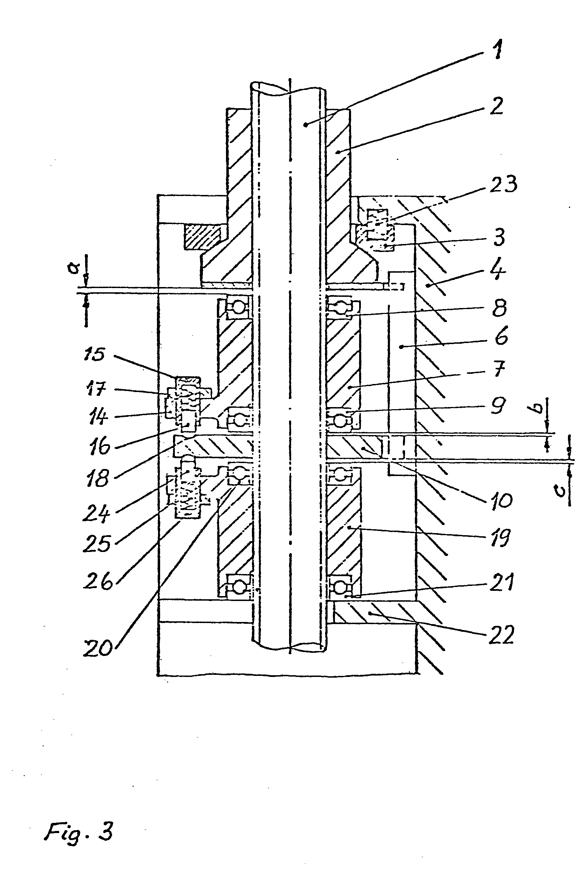

In Fig. 3 ist eine weitere Ausführungsform der Erfindung dargestellt, wobei gleiche Teile mit den gleichen Nummern gekennzeichnet sind.

Bei dieser Ausführungsform weist die Fangmutter 7 im unteren Bereich einen Steg 14 auf, in dem eine Bohrung vorgesehen sein kann. In der Bohrung kann eine Hülse 15 befestigt sein. In der Hülse 15 wird ein Stift 16 geführt und über eine Feder 17 nach vorne vorgespannt. Der Stift 16 kann in eine Ausnehmung der Kontermutter 10 eingreifen.

Die Mitnahme der Fangmutter 7 erfolgt im Normalbetrieb durch den eingerasteten Stift 16 in der Ausnehmung 18 der Kontermutter 10. Bei einem Verschleiß oder einem Bruch der Hubmutter 2 wird die Axiallast wiederum durch die Fangmutter 7 aufgenommen, so daß durch die nunmehr erhöhte Gleitreibung zwischen Fangmutter 7 und Spindel 1, der Stift 16 entgegen der Kraft der Federeinrichtung 17 nach oben gedrückt wird, so daß die Kontermutter 10 sich wiederum von unten an die Fangmutter 7 anlegt und beim weiteren Anheben mit dieser gekontert wird.

Außer den beiden bisher gezeigten Einrichtungen zwischen Kontermutter 10 und Fangmutter 7 können auch andere vergleichbare Einrichtungen zur Anwendung kommen, die im Normalfall die beiden Muttern 10, 7 auf Distanz halten und beim Auftreten einer erhöhten Gleitreibung zwischen Fangmutter 7 und Spindel 1 die Kontermutter 10 an die Fangmutter 7 anlaufen lassen.

Unterhalb der Kontermutter 10 kann im Abstand "c", der gleich dem Abstand "b" sein kann, eine zweite Fangmutter 19 angeordnet sein. Die Fangmutter 19 kann ebenfalls am oberen und unteren Ende je ein Rollenlager 20 und 21 aufweisen.

Unterhalb der Fangmutter 19 ist insbesondere ein Mitnahmesteg 22 direkt am Hubwagen 4 angeordnet, wobei der Mitnahmesteg 22 direkt am unteren Rollenlager 21 anliegen oder aber auch einen geringen Abstand aufweisen kann. Die Mitnahme der Fangmutter 19 im Normalbetrieb kann, ähnlich wie zuvor bei der Fangmutter 7 beschrieben, erfolgen, wobei ebenfalls eine Hülse 26, ein Stift 24 und eine Federeinrichtung 25 zum Einsatz kommen kann. Es können aber auch andere vergleichbare Einrichtungen eingesetzt werden. Diese zuvor beschriebene Zusatzeinrichtung kann auch als separate Sicherheitseinrichtung eingesetzt werden.

Zwischen dem Ausgleichsstück 3 und dem Hubwagen 4 kann weiterhin eine Entlastungseinrichtung 23, die insbesondere aus einer oder mehreren Federn bestehen kann, eingesetzt werden.

Diese Zusatzsicherheitseinrichtung arbeitet nun wie folgt. Wenn beim Abwärtsfahren unterhalb der Trageinrichtung Gegenstände angeordnet sind, wird der Hubwagen 4 und damit der Mitnahmesteg 22 angehoben, so daß eine nach oben gerichtete Axialkraft auftritt, die von der Fangmutter 18 aufgenommen wird. Diese Axialkraft erhöht die Gleitreibung zwischen Fangmutter 19 und Spindel 1, so daß die Fangmutter 19 an die Kontermutter 10, entgegen der Kraft der Federeinrichtung 25, zum Anliegen kommt und beim weiteren Absenken mit dieser gekontert wird, so daß die Hebeeinrichtung blockiert wird.

Um diese Zusatzeinrichtung auch als sogenannte Fußschutzeinrichtung einzusetzen, kann die Entlastungseinrichtung 23 eingesetzt werden, so daß diese Einrichtung fase das gesamte Eigengewicht des Hubwagens 4 zusammen mit den Aufnahmemitteln ausgleicht. Wenn nun der Hubwagen 4 bereits im unteren Bereich der Hebeeinrichtung ist und die Aufnahmemittel entlastet sind, wird des Eigengewicht durch die Entlastungseinrichtung fast ausgeglichen. Bei einem Hindernis unter

dem Hubwagen 4 oder den Aufnahmemitteln, z.B. ein Fuß der Bedienungsperson, reicht bereits eine geringe Restkraft axial nach oben, z.B. 200—300 N, um die Fangmutter 19 an die Kontermutter 10 anlegen zu lassen, so daß beim weiteren Absenken der Hebeeinrichtung, diese blockiert wird.

**Patentansprüche**

1. Sicherheitseinrichtung für eine spindelbetriebene Hebeeinrichtung, insbesondere Zwei-Säulen-Kraftfahrzeugs-Hebebühne, mit einer auf einer Hubspindel (1) geführten Hubmutter (2), auf der ein Hubwagen (4) aufliegt und mit einer in geringem Abstand unter der Hubmutter (2) angeordneten Fangmutter (7), die auf der Hubspindel (1) zwangsläufig mitgeführt ist und die bei Versagen der Hubmutter (2) sich gegenüber dieser verdreht und an dieser anliegt, dadurch gekennzeichnet, daß eine unterhalb der Fangmutter (7) gegenüber der Hubmutter (2) unverdrehbare Kontermutter (10) vorgesehen ist, die bei unbelasteter Fangmutter (7) einen geringen Abstand (b) gegenüber der Fangmutter (7) aufweist und die bei belasteter Fangmutter (7) durch eine dabei stattfindende Drehbewegung zwischen Fangmutter (7) und Kontermutter (10) sich unten an die Fangmutter (7) anlegt und durch diese Konterung die Hubspindel (1) in Hubrichtung blockiert ist.

2. Sicherheitseinrichtung nach Anspruch 1, dadurch gekennzeichnet, daß bei Belastung der Fangmutter (7) das aus der Reibung zwischen der Spindel (1) und der Fangmutter (7) resultierende Moment größer ist als das Moment, das aux der Reibung zwischen der Hubmutter (2) und der Fangmutter (7) einerseits und aus einer den Abstand zwischen der Fangmutter (7) und der Kontermutter (10) bei unbelasteter Fangmutter (7) herstellenden Kraft resultiert.

3. Sicherheitseinrichtung nach Anspruch 1 oder 2, dadurch gekennzeichnet, daß zwischen der Fangmutter (7) und der Hubmutter (2) und/oder zwischen der Fangmutter (7) und der Kontermutter (10) ein Rollen- oder Gleitlager (8 und/oder 9) vorgesehen ist.

4. Sicherheitseinrichtung nach einem der Ansprüche 1 bis 3, dadurch gekennzeichnet, daß der Abstand (b) zwischen der Fangmutter (7) und der Kontermutter (10) durch eine Federeinrichtung (13, 17) vorwählbar ist.

5. Sicherheitseinrichtung nach einem der Ansprüche 1 bis 4, dadurch gekennzeichnet, daß die Fangmutter (7) in der Senkrichtung federnd und in der Hubrichtung durch einen Festanschlag (11) geführt ist.

6. Sicherheitseinrichtung nach einem der Ansprüche 1 bis 5, dadurch gekennzeichnet, daß unterhalb der Kontermutter (10) eine zweite Fangmutter (19) angeordnet ist.

7. Sicherheitseinrichtung nach Anspruch 6, dadurch gekennzeichnet, daß die zweite Fangmutter (19) in der Hubrichtung der Hebeeinrichtung federnd und in der Senkrichtung durch einen Anschlag (24) geführt wird.

8. Sicherheitseinrichtung nach Anspruch 6 oder 7, dadurch gekennzeichnet, daß die zweite Fangmutter (19) an beiden Seiten Rollen- oder Gleitlager (20, 21) aufweist.

9. Sicherheitseinrichtung nach einem der Ansprüche 6 bis 8, dadurch gekennzeichnet, daß eine Federeinrichtung (25) zwischen der Kontermutter (10) und der zweiten Fangmutter (19) eingesetzt ist.

10. Sicherheitseinrichtung nach Anspruch 4 oder 9, dadurch gekennzeichnet, daß die Federeinrichtung (13 und/oder 25) in einer Ausnehmung der Fangmutter (7 und/oder 19) angeordnet ist.

11. Sicherheitseinrichtung nach einem der Ansprüche 4, 9 und 10, dadurch gekennzeichnet, daß die Federeinrichtung aus einer Hülse (15, 26), einem Stift (16, 24) und einer Feder (17, 25) besteht und der Stift (16, 24) in die Kontermutter (10) eingreift.

12. Sicherheitseinrichtung nach einem der Ansprüche 6 bis 11, dadurch gekennzeichnet, daß unterhalb der zweiten Fangmutter (19) eine Mitnahmeeinrichtung (22) am Hubwagen (4) befestigt ist.

13. Sicherheitseinrichtung nach einem der Ansprüche 8 und 9 bis 11, dadurch gekennzeichnet, daß das aus der Kraft der Federeinrichtung (13, 25) resultierende Moment etwas größer ist als das aus der normalen Gleitreibung zwischen Fangmutter (7, 19) und Spindel (1) resultierende Moment.

14. Sicherheitseinrichtung nach einem der Ansprüche 1 bis 13, dadurch gekennzeichnet, daß zwischen der Hubmutter (2) und dem Hubwagen (4) eine Entlastungseinrichtung (23) angeordnet ist.

15. Sicherheitseinrichtung nach Anspruch 14, dadurch gekennzeichnet, daß ein oder mehrere Federn als Entlastungseinrichtung (23) eingesetzt werden.

16. Sicherheitseinrichtung nach Anspruch 14 oder 15, dadurch gekennzeichnet, daß die Kraft der Entlastungseinrichtung (23) etwas geringer als das Gewicht des Hubwagens (4) und der Aufnahmeeinrichtung bemessen ist.

17. Sicherheitseinrichtung nach einem der Ansprüche 1 bis 16, dadurch gekennzeichnet, daß zwischen der Hubmutter (2) und der Fangmutter (7) ein dem zulässigen Verschleiß des Gewindes der Hubspindel (1) entsprechender Abstand (a) vorhanden ist.

## Revendications

1. Dispositif de sécurité pour un dispositif de levage entraîné par tige filetée, notamment pour des platesformes élévatrices à deux colonnes pour véhicules, comportant un écrou de levage (2) guidé sur une tige filetée (1), sur lequel repose un chariot de levage (4), et un écrou de retenue (7) disposé à faible distance sous l'écrou de levage (2), guidé par contrainte sur la tige de levage (1) et qui, en cas de défaillance de l'écrou de levage (2) tourne par rapport à celui-ci et s'appuie contre lui, caractérisé en ce qu'on prévoit en dessous de l'écrou de retenue (7) un contre-écrou (10) qui ne peut pas tourner par rapport à l'écrou de levage (2), qui, lorsque l'ecrou de retenue (7) est déchargé, se trouve à une faible distance (b) de l'écrou de retenue (7), et qui, lorsque l'écrou de retenue (7) est chargé, vient s'appuyer contre l'écrou de retenue (7) par suite d'un mouvement de rotation qui se produit entre l'écrou de retenue (7) et le contre-écrou (10), et en ce que, par l'action du contre-écrou, la tige de levage (1) est bloquée dans le sens du levage.

2. Dispositif de sécurité selon la revendication 1, caractérisé en ce que, lorsque l'écrou de retenue (7) est chargé, le moment résultant du frottement entre la tige filetée (1) et l'écrou de retenue (7) est plus grand que le moment qui résulte du frottement entre l'écrou de levage (2) et l'écrou de retenue (7) d'une part, et de la force qui, lorsque l'écrou de retenue (7) est déchargé, maintient la distance entre l'écrou de retenue (7) et le contre-écrou (10).

3. Dispositif de sécurité selon la revendication 1 ou la revendication 2, caractérisé en ce qu'on prévoit entre l'écrou de retenue (7) et l'écrou de levage (2) et/ou entre l'écrou de retenue (7) et le contre-écrou (10) un palier à rouleaux ou un palier lisse (8 et/ou 9).

4. Dispositif de sécurité selon l'une des revendications 1 à 3, caractérisé en ce qu'on peut choisir à l'avance la distance (b) entre l'écrou de retenue (7) et le contre-écrou (10) à l'aide d'un dispositif de ressort (13, 17).

5. Dispositif de sécurité selon l'une des revendications 1 à 4, caractérisé en ce que l'écrou de retenue (7) est guidé élastiquement dans le sens de la descente, et par une butée fixe (11) dans le sens du levage.

6. Dispositif de sécurité selon l'une des revendications 1 à 5, caractérisé en ce qu'un second écrou de retenue (19) est placé en dessous du contre-écrou (10).

7. Dispositif de sécurité selon la revendication 6, caractérisé en ce que le second écrou de retenue (19) est guidé élastiquement dans le sens du levage et est guidé contre une butée (24) dans le sens de la descente.

8. Dispositif de sécurité selon la revendication 6 ou la revendication 7, caractérisé en ce que le second écrou de retenue (19) comporte de chaque côté des paliers à rouleaux ou lisses (20, 21).

9. Dispositif de sécurité selon l'une des revendications 6 à 8, caractérisé en ce qu'on utilise un dispositif de ressort (25) entre le contre-écrou (10) et le second écrou de retenue (19).

10. Dispositif de sécurité selon la revendication 4 ou la revendication 9, caractérisé en ce que le dispositif de ressort (13 et/ou 25) est disposé dans un évidement de l'écrou de retenue (7 et/ou 19).

11. Dispositif de sécurité selon l'une des revendications 4, 9 et 10, caractérisé en ce que le dispositif de ressort est constitué par un manchon (15, 26), une tige (16, 24) et un ressort (17, 25) et que la tige (16, 24) pénètre dans le contre-écrou (10).

12. Dispositif de sécurité selon l'une des revendications 6 à 11, caractérisé en ce qu'un dispositif d'entraînement (22) est fixé sur le chariot de levage (4) en dessous du second écrou de retenue (19).

13. Dispositif de sécurité selon l'une des revendications 8 et 9 à 11, caractérisé en ce que le moment résultant de la force du dispositif de ressort (13, 25) est légèrement plus grand que le moment résultant du frottement glissant normal entre l'écrou de retenue (7, 19) et la tige filetée (1).

14. Dispositif de sécurité selon l'une des revendications 1 à 13, caractérisé en ce qu'un dispositif de décharge (23) est disposé entre l'écrou de levage (2) et le chariot de levage (4).

15. Dispositif de décurité selon la revendication 14, caractérisé en ce qu'on utilise un ou plusieurs ressorts comme dispositif de décharge (23).

16. Dispositif de sécurité selon la revendication 14 ou la revendication 15, caractérisé en ce que la force du dispositif de décharge (23) est calculée légèrement plus faible que le poids du chariot de levage (4) et des moyens de réception.

17. Dispositif de sécurité selon l'une des revendications 1 à 16, caractérisé en ce qu'il y a entre l'écrou de levage (2) et l'écrou de retenue (7) une distance (a) correspondant à l'usure autorisée du filetage de la tige de levage (1).

**Claims**

1. A safety device for a spindle-operated lifting apparatus, in particular a double-column vehicle-elevating platform, with a lifting nut (2), which is driven along a lifting spindle (1) and supports a lifting carriage (4), and with a locking nut (7), which is disposed with small clearance below the lifting nut (2) and is constrained to follow along the lifting spindle (1) and which, in the event of failure of the lifting nut (2), rotates with respect thereto and abuts thereagainst, characterized in that a counter nut (10), which is non-rotatable with respect to the lifting nut (2), is provided below the locking nut (7), said counternut having a small separation (b) from the locking nut (7) when the locking nut is under no load, and abutting against the locking nut (7) at the lower side when the locking nut (7) is under load, because of a rotary movement which then occurs between the locking nut (7) and the counter nut (10), and that because of this countering action the lifting spindle (1) is blocked in the direction of lifting.

2. A safety device according to claim 1, characterized in that when the locking nut (7) is under load, the moment resulting from the friction between the spindle (1) and the locking nut (7) is greater than the moment resulting, on the one hand, from the friction between the lifting nut (2) and the locking nut (7) and, on the other hand, from a force producing the separation between the locking nut (7) and the counter nut (10) when the locking nut (7) is under no load.

3. A safety device according to claim 1 or 2, characterized in that a roller or slide bearing (8 and/or 9) is provided between the locking nut (7) and the lifting nut (2) and/or between the locking nut (7) and the counter nut (10).

4. A safety device according to any one of claims 1 to 3, characterized in that the separation (b) between the locking nut (7) and the counter nut (10) is preselectable by spring means (13, 17).

5. A safety device according to any one of claims 1 to 4, characterized in that the locking nut (7) is driven through spring-contact in the lowering direction and is driven in the lifting direction by a positive contact member (11).

6. A safety device according to any one of claims 1 to 5, characterized in that a second locking nut (19) is disposed below the counter nut (10).

7. A safety device to claim 6, characterized in that the second locking nut (19) is driven through spring contact in the lifting direction of the lifting apparatus and is driven by a contact member (24) in the lowering direction.

8. A safety device according to claim 6 or 7, characterized in that the second locking nut (19) is provided on both sides with roller or slide bearings (20, 21).

9. A safety device according to any one of claims 6 to 8, characterized in that spring means (25) are inserted between the counter nut (10) and the second locking nut (19).

10. A safety device according to claim 4 or 9, characterized in that the spring means (13 and/or 25) are disposed in a recess of the locking nut (7 and/or 19).

11. A safety device according to any one of claims 4, 9 and 10, characterized in that the spring means consist of a sleeve (15, 26), a pin (16, 24) and a spring (17, 25), and the pin (16, 24) engages in the counter nut (10).

12. A safety device according to any one of claims 6 to 11, characterized in that engaging means (22) are mounted to the lifting carriage (4) below the second locking nut (19).

13. A safety device according to any one of claims 8 and 9 to 11, characterized in that the moment resulting from the force of the spring means (13, 25) is slightly greater than the moment resulting from the normal sliding friction between the locking nut (7, 19) and the spindle (1).

14. A safety device according to any one of claims 1 to 13, characterized in that relief means are disposed between the lifting nut (2) and the lifting carriage (4).

15. A safety device according to claim 14, characterized in that one or a plurality of springs are employed as relief means (23).

16. A safety device according to claim 14 or 15, characterized in that the force of the relief means (23) is predetermined to be slightly less than the weight of the lifting carriage (4) and the load-receiving means.

17. A safety device according to any one of claims 1 to 16, characterized in that a clearance (a) appropriate to the admissible wear of the thread of the lifting spindle (1) is present between the lifting nut (2) and the locking nut (7).

Fig: 1

X

Ansicht X

Fig: 2

Fig. 3